**Europäisches Patentamt**

**European Patent Office**

**Office européen des brevets**

(19)

(11) Veröffentlichungsnummer : **0 022 124** **B1**

# EUROPÄISCHE PATENTSCHRIFT

(12)

(45) Veröffentlichungstag der Patentschrift :
**16.02.83**

(21) Anmeldenummer : **80890064.1**

(22) Anmeldetag : **04.06.80**

(51) Int. Cl.³ : **F 16 H 1/36, F 16 H 1/48**

(54) **Mehrstufiges Planeten-Untersetzungsgetriebe.**

(30) Priorität : **18.06.79 AT 4300/79**

(43) Veröffentlichungstag der Anmeldung :
**07.01.81 Patentblatt 81/01**

(45) Bekanntmachung des Hinweises auf die Patenterteilung : **16.02.83 Patentblatt 83/07**

(84) Benannte Vertragsstaaten :
**CH DE FR GB IT LI SE**

(56) Entgegenhaltungen :
**DD A 34 215**
**DD A 39 725**
**DE A 1 650 923**
**DE A 2 148 938**
**DE B 1 425 761**
**GB A 1 222 729**

(73) Patentinhaber : **VOEST-ALPINE Aktiengesellschaft**
**Friedrichstrasse 4**
**A-1011 Wien (AT)**

(72) Erfinder : **Nemeth, Arpad**
**Giesserriegel 11**
**A-8740 Zeltweg (AT)**
Erfinder : **Krassnitzer, Otto**
**Erzstrasse 14**
**A-8740 Zeltweg (AT)**
Erfinder : **Kogler, Peter, Dipl.-Ing.**
**Hautzenbichlstrasse 13**
**A-8720 Knittelfeld (AT)**

(74) Vertreter : **Kretschmer, Adolf, Dipl.-Ing.**
**Schottengasse 3a**
**A-1014 Wien (AT)**

Mehrstufiges Planeten-Untersetzungsgetriebe

Die Erfindung bezieht sich auf ein mehrstufiges Planeten-Untersetzungsgetriebe, bei welchem der Planetenradträger der ersten Stufe mit dem Sonnenrad der jeweils folgenden Stufe über eine keilwellenartige Verbindung drehsicher verbunden ist, wobei der Planetenradträger der ersten Stufe verlagerungsfähig angeordnet und mit einem axialen Ansatz ausgestattet ist, der mit dem Sonnenrad der folgenden Stufe verbunden und knapp neben diesem angeordnet ist, und wobei in der jeweils folgenden Stufe das Sonnenrad verlagerungsfähig angeordnet ist, der Planetenradträger der letzten Stufe starr gelagert ist und das Hohlrad starr mit dem Getriebegehäuse verbunden ist.

Bei Planetengetrieben wirken sich die Fertigungsungenauigkeiten in besonderem Maße aus. Es ist wichtig, daß alle Planetenräder der entsprechenden Planetenstufe gleichmäßig tragen, da andernfalls durch ungleichmäßige Lastverteilung Überbeanspruchungen und in weiterer Folge Schädigungen des Getriebes auftreten. Es wurde daher bereits vorgeschlagen, Zahnräder zum Ausgleich von Fertigungsungenauigkeiten relativ zueinander selbsteinstellend zu lagern. Hiebei ist es bekannt, die Zahnflanken der Planetenräder ballig auszuführen, was aber wieder den Nachteil hat, daß die tragende Breite der Zahnflanken verkleinert wird. Es ist weiters auch bekannt, den Planetenradträger der ersten Stufe über eine Zahnkupplung mit balligen Zahnflanken mit dem Sonnenrad der zweiten Stufe zu kuppeln, wobei in der zweiten Stufe das Sonnenrad verlagerungsfähig angeordnet ist.

Bei einem beispielsweise aus der DD-A 39 725 bekannt gewordenen Planetengetriebe sind alle Planetenradträger starr gelagert und weisen auf fliegend gelagerten Planetenbolzen starr gelagerte Planetenräder auf. Die Sonnenritzel sind bei dieser Ausbildung axial und radial beweglich gelagert und die Hohlräder waren von einem beweglich gelagerten Innenzahnkranz gebildet. Eine derartige Konstruktion ist fertigungstechnisch überaus aufwendig und vor allen Dingen bringt die bewegliche Lagerung eines Hohlrades bedeutende Probleme in Bezug auf die Fertigung und den Verschleiß mit sich.

Aus der GB-A-1 222 729 ist ein mehrstufiges Planeten-Untersetzungsgetriebe bekannt geworden, bei welchem der Planetenradträger der ersten Stufe und das Sonnenrad der folgenden Stufe verlagerbar angeordnet sind. Der Planetenradträger der ersten Stufe weist hiebei einen axialen Ansatz auf, welcher in das Sonnenrad der folgenden Stufe über eine keilwellenartige Verbindung eingreift. Der Planetenradträger und das Sonnenrad können sich dabei nicht unabhängig voneinander verlagern, und es ist somit eine Einstellung der Zahnräder der einzelnen Stufen relativ zueinander in einer solchen Weise, daß die Kraft auf alle Zahnflanken gleichmäßig verteilt wird, nicht einwandfrei möglich. Bei den geringsten Ungenauigkeiten wird bereits der Verschleiß der Zähne wesentlich erhöht. Bei diesem Getriebe erfolgt der Antrieb über das Zahnrad der ersten Stufe und der Abtrieb erfolgt über das Hohlrad, welches starr mit dem Gehäuse verbunden ist. Aus der DE-A-2 148 938 ist ein Planetengetriebe bekannt geworden, bei welchem der Planetenradträger der ersten Stufe über einen axialen Ansatz mit dem Sonnenrad der zweiten Stufe verbunden ist. Hiebei ist aber der Planetenradträger der ersten Stufe gleichfalls wieder mit dem Sonnenrad der folgenden Stufe verkeilt.

Die Erfindung bezieht sich nun auf ein Planetengetriebe der eingangs genannten Art und hat sich die Aufgabe gestellt, bei weitgehend gleichmäßiger Lastverteilung für die Zahnräder in allen Planetenstufen die übertragbare Leistung bei gegebenen Abmessungen sowie die Lebensdauer solcher Planetengetriebe wesentlich zu erhöhen. Gleichzeitig zielt die Erfindung darauf ab, die Herstellung eines solchen Planetengetriebes so einfach wie möglich zu halten. Zur Lösung dieser Aufgabe besteht die Erfindung darin, daß der Planetenradträger der ersten Stufe mit dem Sonnenrad der jeweils folgenden Stufe in an sich bekannter Weise mittels einer Zahnkupplung verbunden ist, wobei Sonnenrad und Planetenradträger relativ zueinander verlagerungsfähig sind, wobei der axiale Ansatz des verlagerungsfähig angeordneten Planetenradträgers der ersten Stufe die Innenverzahnung der Zahnkupplung aufweist und wobei der verlagerungsfähige Planetenradträger in an sich bekannter Weise sphärisch gelagerte Planetenräder aufweist. Dadurch, daß der Planetenradträger der ersten Stufe mit dem Sonnenrad der jeweils folgenden Stufe durch eine Zahnkupplung verbunden ist, sind Sonnenrad und Planetenradträger relativ zueinander verlagerungsfähig und können sich daher unabhängig voneinander einstellen, so daß in jeder Stufe eine optimale Vergleichmäßigung der Belastung der Zähne der Zahnräder ermöglicht wird. Dadurch aber, daß der Planetenradträger der ersten Stufe mit dem Sonnenrad der folgenden Stufe nur durch eine Zahnkupplung verbunden ist und sich daher unabhängig vom Sonnenrad der folgenden Stufe einstellen kann, wird auch eine Schrägstellung des Planetenradträgers der ersten Stufe ermöglicht. Dadurch aber, daß die Planetenräder der ersten Stufe eine sphärische Lagerung im Planetenradträger aufweisen, wird eine solche Schrägstellung des Planetenradträgers unschädlich gemacht. Es wird somit eine vollständig gleichmäßige Lastverteilung auf die einzelnen Zahnräder durch die verlagerungsfähige Anordnung des Planetenradträgers in Kombination mit der sphärischen Lagerung der Planetenräder erreicht und es wird ermöglicht, sämtliche Zahnräder mit geraden, nichtballigen Zahnflanken auszubilden, so daß die Zahnräder über ihre gesamte Breite tragen.

Durch die verlagerungsfähige Anordnung des Sonnenrades der jeweils zweiten Untersetzungsstufe wird auch wieder eine weitgehend gleichmäßige Lastverteilung auf alle Planetenräder erzielt, ohne daß die Planetenräder mit balligen Zahnflanken ausgebildet sind, so daß auch diese über die ganze Zahnbreite tragen. Die verlagerungsfähige Anordnung des Planetenradträgers der ersten Untersetzungsstufe ermöglicht den Ausgleich von Achsungenauigkeiten zwischen erster und jeweils folgender Stufe. Diese Achsungenauigkeiten müssen nun durch die Zahnkupplung einerseits und durch die sphärische Lagerung der Planetenräder aufgenommen werden. Die erfindungsgemäße Ausbildung ermöglicht hiebei, das oder die Hohlräder starr mit dem Getriebegehäuse zu verbinden, wodurch die Fertigung wesentlich vereinfacht wird. Ein derartiges starr mit dem Getriebegehäuse verbundenes Hohlrad bietet aber auch den Vorteil, den Durchmesser des Getriebes zu verkleinern, ohne daß die Gefahr eines Bruches des Hohlrades besteht. Die in der Zahnkupplung auftretenden Kräfte bewirken ein relativ geringes Auslenkmoment auf das Sonnenrad, welches durch die Rückstellmomente, welche sich durch den Zahneingriff ergeben, ohne weiteres aufgenommen werden. Dadurch, daß die Achsungenauigkeiten durch die verlagerungsfähige Anordnung des Planetenradträgers und die sphärische Lagerung der Planetenräder in diesen ausgeglichen werden, wird ermöglicht, das Sonnenrad der ersten Stufe starr zu lagern, was für die Antriebsverbindung von wesentlicher Bedeutung ist. Dadurch, daß das Sonnenrad der jeweils folgenden Stufe verlagerbar angeordnet ist und der Planetenradträger der letzten Stufe starr gelagert ist, wird die Ableitung des Abtriebes von diesem Planetenradträger der letzten Stufe wesentlich vereinfacht. Es lassen sich ohne weiteres mehrere Getriebestufen mit jeweils verlagerungsfähig ausgebildeten Planetenradträgern und Sonnenritzeln verwirklichen.

Aus der DD-A-34 215 ist es bekannt geworden, die Planetenräder eines Planetenradgetriebes sphärisch zu lagern. Bei dieser Anordnung sind jedoch die Planetenräder starr gelagert, so daß die sphärische Lagerung der Planetenräder keinen wesentlichen Vorteil bringt.

Die Ausbildung kann so getroffen sein, daß das Hohlrad bzw. die Hohlräder einstückig mit dem Getriebegehäuse ausgebildet ist bzw. sind. Diese Ausbildung bewirkt eine Verringerung des Getriebedurchmessers gleichzeitig mit einer Vereinfachung der Herstellung.

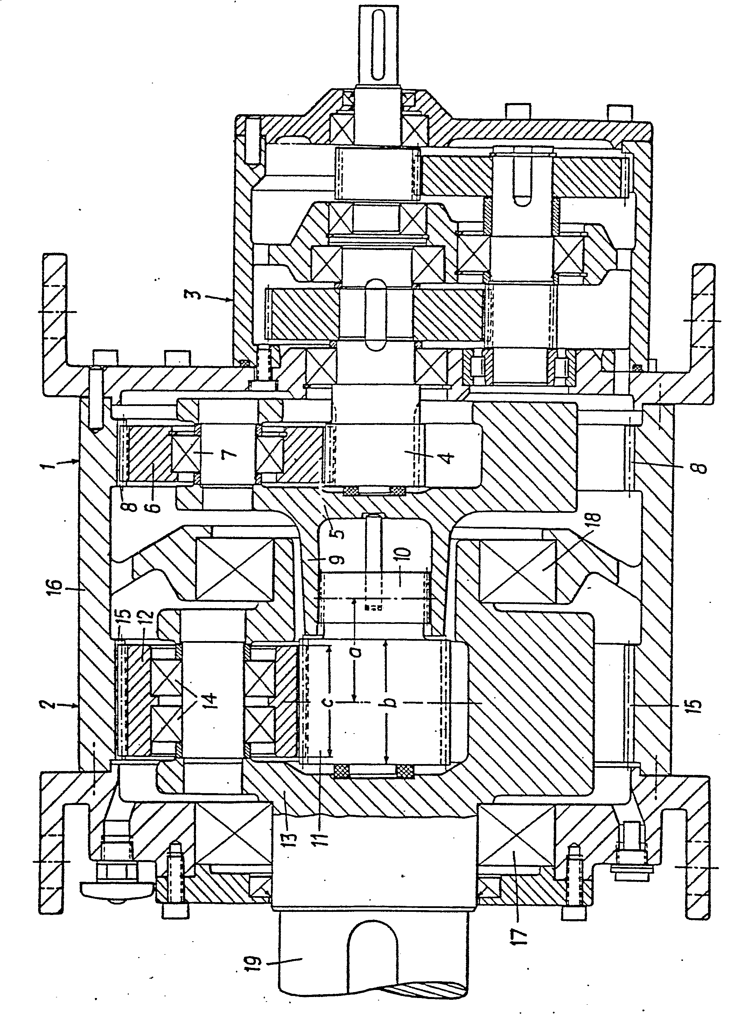

In der Zeichnung ist die Erfindung an Hand eines Ausführungsbeispieles schematisch veranschaulicht.

Die Zeichnung zeigt einen Axialschnitt durch ein zweistufiges Planeten-Untersetzungsgetriebe.

1 ist die erste Stufe des Planeten-Untersetzungsgetriebes und 2 ist die zweite Stufe. 3 ist ein Vorgelegegetriebe, über welches das starr gelagerte Sonnenrad 4 der ersten Stufe angetrieben wird. Der Planetenradträger 5 der ersten Stufe ist verlagerungsfähig angeordnet und in diesem Planetenradträger sind die Planetenräder 6 unter Verwendung von sphärischen, d. h. selbsteinstellenden Lagern 7 gelagert. 8 ist das Hohlrad, welches starr im Gehäuse angeordnet ist. Die Zähne aller Zahnräder weisen gerade, nichtballige Zahnflanken auf. Durch die sphärische Lagerung der Planetenräder 6 und durch die verlagerungsfähige Anordnung des Planetenradträgers 5 wird eine weitgehend gleichmäßige Lastverteilung auf alle Planetenräder 6 erreicht.

Der Planetenradträger 5 der ersten Stufe weist einen axialen Ansatz 9 auf, welcher die Innenverzahnung einer Zahnkupplung aufweist. 10 ist der zweite Kupplungsteil, welcher die Außenverzahnung der Zahnkupplung trägt. Diese Außenverzahnung ist mit balligen Zahnflanken ausgebildet.

Der Kupplungsteil 10 besteht aus einem Stück mit dem Sonnenrad 11 der zweiten Planetenstufen 2. 12 sind die Planetenräder, welche im Planetenradträger 13 unter Verwendung von Wälzlagern 14 gelagert sind. 15 ist das Hohlrad, welches ebenso wie das Hohlrad 8 der ersten Stufe starr im Gehäuse 16 angeordnet ist. Der Planetenradträger 13 ist unter Verwendung von Lagern 17 und 18 starr im Gehäuse 16 gelagert und weist die Abtriebswelle 19 auf.

Der Abstand a zwischen der Mitte des Sonnenrades 11 und der Mitte der Zahnkupplung 9, 10 ist kleiner als die Breite b des Sonnenrades und auch kleiner als die Breite c der Planetenräder 12, die mit dem Sonnenrad kämmen. Da das Sonnenrad nur über die Breite c mit den Planetenrädern 12 in Eingriff steht, stellt das Maß c die wirksame Breite des Sonnenrades dar. Das Sonnenrad 11, die Planetenräder 12 und das Hohlrad 15 weisen gerade, nichtballige Zahnflanken auf. Durch den Zahneingriff mit den Planetenrädern 12 wird das Sonnenrad 11 in seiner Lage gehalten, in welcher es über die volle Zahnbreite in Eingriff mit den Planetenrädern 12 steht. In der Zahnkupplung 9, 10 treten infolge radialer Verlagerungen Kräfte auf, welche auf die Zahnreibung zurückzuführen sind. Diese Kräfte wirken über den Hebelarm a auf das Sonnenrad 11 im Sinne einer Auslenkung des Sonnenrades aus der Lage parallel zu den Achsen der Planetenräder 12. Dieser Auslenkung entgegen wirken die von den Planetenrädern 12 ausgeübten Rückstellkräfte. Infolge der Kürze des Hebelarmes a sind diese von der Zahnkupplung 9, 10 ausgeübten Auslenkkräfte geringer als die Rückstellkräfte, so daß die Zähne des Sonnenrades 11 und der Planetenräder 12 über die ganze Zahnbreite tragen.

**Anspruch**

Mehrstufiges Planeten-Untersetzungsgetriebe, bei welchem der Planetenradträger (5) der ersten Stufe (1) mit dem Sonnenrad (11) der jeweils folgenden Stufe (2) über eine keilwellenartige Verbindung drehsicher verbunden ist, wobei der Planetenradträger (5) der ersten Stufe (1) verlagerungsfähig angeordnet und mit einem axialen Ansatz (9) ausgestattet ist, der mit dem Sonnenrad (11) der folgenden Stufe (2) verbunden und knapp neben diesem angeordnet ist, und wobei in der jeweils folgenden Stufe (2) das Sonnenrad (11) verlagerungsfähig angeordnet ist, der Planetenradträger (13) der letzten Stufe starr gelagert ist und das Hohlrad (8, 15) starr mit dem Getriebegehäuse (16) verbunden ist, dadurch gekennzeichnet, daß der Planetenradträger (5) der ersten Stufe (1) mit dem Sonnenrad (11) der jeweils folgenden Stufe (2) in an sich bekannter Weise mittels einer Zahnkupplung (9, 10) verbunden ist, wobei Sonnenrad (11) und Planetenradträger (5) relativ zueinander verlagerungsfähig sind, wobei der axiale Ansatz (9) des verlagerungsfähig angeordneten Planetenradträgers (5) der ersten Stufe (1) die Innenverzahnung der Zahnkupplung (9, 10) aufweist und wobei der verlagerungsfähige Planetenradträger (5) in an sich bekannter Weise sphärisch gelagerte Planetenräder (6) aufweist.

## Claim

A multi-stage planetary reduction gear in which the planetary carrier (5) of the first stage (1) is drivingly connected to the sun gear (11) of the following stage (2) by means of a splined shaft connection, wherein the planetary carrier (5) of the first stage is arranged floatingly and is provided with a neck (9) which is connected to the sun gear (11) of the following stage (2) and located closely to said sun gear, and wherein in the following stage (2) the sun gear (11) is arranged floatingly, the planetary carrier (13) of the last stage runs on rigidly mounted bearings and the ring gear (8, 15) is rigidly connected with the gearbox case (16), characterized in that the planetary carrier (5) of the first state (1) is connected to the sun gear (11) of the following stage (2) in a per se known manner by means of a denture clutch (9, 10) whereat sun gear (11) and planetary carrier (5) can float relative to each other, wherein the neck (9) of the floatingly arranged planetary carrier (5) of the first stage (1) has the internal denture of the denture clutch (9, 10) and wherein the floatingly arranged planetary carrier (5) in a per se known manner has planet pinion gears (6) running on self-aligning bearings.

## Revendication

Réducteur planétaire à plusieurs étages dans lequel le porte-satellites (5) du premier étage (1) est relié solidairement en rotation à la roue planétaire (11) de l'étage suivant par l'intermédiaire d'une liaison du type à arbre cannelé, cependant que le porte-satellites (5) du premier étage (1) est monté avec jeu et pourvu d'un prolongement axial (9) qui est relié à la roue planétaire (11) de l'étage suivant et est disposé juste contre cette dernière, et que, dans l'étage suivant (2), la roue planétaire (11) est montée avec jeu, le porte-satellites (13) du dernier étage est monté sans jeu et la couronne (8, 15) est reliée rigidement au carter (16) du mécanisme, caractérisé en ce que le porte-satellites (5) du premier étage (1) est relié à la roue planétaire (11) de l'étage suivant (2) d'une façon connue en soi au moyen d'un accouplement à dents (9, 10), cependant que la roue planétaire (11) et le porte-satellites (5) sont montés avec jeu l'un par rapport à l'autre, et que le prolongement axial (9) du porte-satellites (5) monté avec jeu du premier étage (1) comporte la denture intérieure de l'accouplement à dents (9, 10) et que le porte-satellites (5) monté avec jeu comporte des roues satellites (6) montées sur palier sphérique d'une façon connue en soi.